# EUROPÄISCHE PATENTSCHRIFT

(11) **EP 1 993 694 B1**
(45) Veröffentlichungstag und Bekanntmachung des Hinweises auf die Patenterteilung: **25.04.2012**
(21) Anmeldenummer: 07703548.3
(22) Anmeldetag: 23.02.2007
(51) Int. Cl.: B01D 21/00, B01D 36/04, B01D 29/66, B01D 21/24

(54) **VORRICHTUNG UND VERFAHREN ZUM AUFBEREITEN VON RÜCKGESPÜLTEM FLUID**
DEVICE AND METHOD FOR PROCESSING BACKWASHED FLUID
DISPOSITIF ET PROCEDE POUR TRAITER UN FLUIDE LAVE A CONTRE-COURANT

(30) Priorität: 09.03.2006 DE 102006010842
(43) Veröffentlichungstag der Anmeldung: 26.11.2008
(73) Patentinhaber: Dürr Ecoclean GmbH, 70794 Filderstadt (DE)
(72) Erfinder: KÄSKE, Egon, 52078 Aachen (DE)
(74) Vertreter: Hörner, Andreas
(86) Internationale Anmeldenummer: PCT/EP2007/001570
(87) Internationale Veröffentlichungsnummer: WO 2007/101561

(56) Entgegenhaltungen:
- EP-A- 1 306 118
- EP-A1- 0 537 516
- WO-A-2004/041438
- DE-A1- 10 006 262

## Beschreibung

Die vorliegende Erfindung betrifft eine Filtervorrichtung zur Filtrierung eines Feststoffe enthaltenden fluiden Mediums, umfassend ein Rückspülfilter und eine Vorrichtung zum Aufbereiten von rückgespültem Fluid aus dem Rückspülfilter, welches Feststoffe enthält, wobei die Vorrichtung zum Aufbereiten von rückgespültem Fluid eine Sedimentationsvorrichtung zum Abtrennen von Feststoffen aus dem rückgespülten Fluid durch Sedimentation in einem Sedimentsammelbereich umfasst.

Aus dem Stand der Technik sind Vorrichtungen zum Aufbereiten von rückgespültem Fluid aus einem Rückspülfilter bekannt, bei denen die Rückspülmenge des Rückspülfilters in ein Aufbereitungsbecken oder auf ein Bandfiltersystem gegeben wird. Solche Aufbereitungsvorrichtungen weisen einen hohen Flüssigkeitsverlust auf und/oder erfordern Filterhilfsmittel, wie beispielsweise Filterpapier, zum Austrag der in dem rückgespülten Fluid enthaltenen Feststoffe.

Die EP-A-1 306 118 offenbart eine Filtervorrichtung zur Filtrierung eines Feststoffe enthaltenden fluiden Mediums mit den Merkmalen des Oberbegriffs von Anspruch 1.

Die WO-A-2004/041438 offenbart eine Schleuseneinrichtung mit einem Sedimentsammelbereich, der während einer Sedimentationsphase mit einem Magnetabscheider verbindbar und während einer Austragphase vom dem Magnetabscheider abtrennbar und entleerbar ist.

Die EP 0 537 516 A1 offenbart eine Filtervorrichtung gemäß dem Oberbegriff von Anspruch 1.

Der vorliegenden Erfindung liegt die Aufgabe zugrunde, eine Filtervorrichtung mit einer Vorrichtung zum Aufbereiten von rückgespültem Fluid aus einem Rückspülfilter der eingangs genannten Art zu schaffen, welche einen filterhilfsmittelfreien Feststoffaustrag ermöglicht und einen möglichst geringen Flüssigkeitsverlust aufweist.

Diese Aufgabe wird durch eine Filtervorrichtung nach Anspruch 1 gelöst.

Durch die erfindungsgemäß vorgesehene Schleuseneinrichtung kann der sedimentierte Feststoffanteil aus dem rückgespülten Fluid abgetrennt und ausgetragen werden, ohne dass hierfür Filterhilfsmittel erforderlich sind.

Ferner kann durch das Abtrennen des Sedimentsammelbereichs von dem Sedimentationsbehälter während der Austragphase mittels der Schleuseneinrichtung die zusammen mit dem Feststoffanteil ausgetragene Fluidmenge verringert werden.

Die zusammen mit dem Feststoffanteil ausgetragene Fluidmenge ist dann besonders gering, wenn die Austragphase dann eingeleitet wird, wenn der Sedimentsammelbereich möglichst vollständig mit sedimentiertem Feststoff angefüllt ist.

Die erfindungsgemäße Vorrichtung zur Spülmengenaufbereitung eignet sich insbesondere zum Einsatz in Reinigungsanlagen mit wässrigen Reinigern, Ölen und/oder Emulsionen.

Bei einer bevorzugten Ausgestaltung der erfindungsgemäßen Vorrichtung ist vorgesehen, dass die Schleuseneinrichtung ein zwischen dem Sedimentationsbehälter und dem Sedimentsammelbereich angeordnetes Sperrventil umfasst.

Ferner kann vorgesehen sein, dass die Schleuseneinrichtung ein zwischen dem Sedimentsammelbereich und einem Sedimentauslass angeordnetes Sperrventil umfasst.

Um die in dem abgetrennten Feststoffanteil enthaltene Restflüssigkeitsmenge weiter zu reduzieren, kann vorgesehen sein, dass die Aufbereitungsvorrichtung einen Feststoffseparator umfasst, welchem das aus dem Sedimentsammelbereich ausgetragene Sediment zuführbar ist.

Um das mittels des Feststoffseparators von dem Feststoffanteil des Sediments abgetrennte Restfluid weiterverwenden zu können und somit den Fluidverbrauch der das Rückspülfilter umfassenden Filtervorrichtung zu reduzieren, ist es günstig, wenn die Vorrichtung eine Rücklaufleitung umfasst, durch welche mittels des Feststoffseparators abgetrenntes Restfluid einem Behälter für dem Rückspülfilter zuzuführendes fluides Medium zuführbar ist.

Das Feststoffe enthaltende rückgespülte Fluid aus dem Rückspülfilter wird mittels der Sedimentationsvorrichtung in Sediment und Klarphase getrennt.

Um das die Klarphase bildende Fluid weiterverwerten und den Fluidverbrauch einer das Rückspülfilter umfassenden Filtervorrichtung zu reduzieren, ist es günstig, wenn die Vorrichtung eine Klarphasenleitung umfasst, durch welche Klarphase aus dem Sedimentationsbehälter einem Behälter für dem Rückspülfilter zuzuführendes fluides Medium zuführbar ist.

Alternativ oder ergänzend hierzu kann auch vorgesehen sein, dass die Vorrichtung eine Klarphasenleitung umfasst, durch welche Klarphase aus dem Sedimentationsbehälter einem Behälter für Filtrat aus dem Rückspülfilter zuführbar ist.

Bei der Erfindung ist vorgesehen, dass die Sedimentationsvorrichtung eine Druckluftzufuhr umfasst, mittels welcher der Innenraum des Sedimentationsbehälters mit unter einem erhöhten Druck stehender Luft beaufschlagbar ist.

Klarphase ist durch den erhöhten Druck aus dem Innenraum des Sedimentationsbehälters verdrängbar, um auf diese Weise die Klarphase aus dem Sedimentationsbehälter auszutragen.

Ferner ist der Sedimentationsbehälter mit einer Luftkissenkammer versehen, welche ein durch Zufuhr von Druckluft zu dem Sedimentationsbehälter komprimierbares Luftkissen enthält.

Eine solche Luftkissenkammer kann insbesondere durch eine oder mehrere Rohre begrenzt sein.

Um zu verhindern, dass zusammen mit der Klarphase auch Verunreinigungen aus dem Sedimentationsbehälter ausgetragen werden, umfasst die Sedimentationsvorrichtung ein Sieb, durch welches Klarphase aus dem Sedimentationsbehälter abführbar ist.

Bei einer bevorzugten Ausgestaltung der Erfindung ist vorgesehen, dass das Sieb mittels eines Luftkissens von Verunreinigungen freispülbar ist.

Insbesondere kann es sich hierbei um ein durch Zufuhr von Druckluft zu dem Sedimentationsbehälter komprimierbares Luftkissen handeln.

Die Expansion des Luftkissens, durch welche das Sieb freigespült wird, kann dabei durch eine externe Druckluftzufuhr zu dem Luftkissen unterstützt werden.

Der vorliegenden Erfindung liegt die weitere Aufgabe zugrunde, ein Verfahren zum Aufbereiten von rückgespültem Fluid aus einem Rückspülfilter, welches Feststoffe enthält, zu schaffen, welches einen filterhilfsmittelfreien Feststoffaustrag bei möglichst geringem Fluidverlust ermöglicht.

Diese Aufgabe wird erfindungsgemäß durch ein Verfahren zum Aufbereiten von rückgespültem Fluid aus einem Rückspülfilter, welches Feststoffe enthält, nach Anspruch 7 gelöst.

Dadurch, dass der Sedimentsammelbereich vor dem Austragen des Sediments mittels der Schleuseneinrichtung von dem Sedimentationsbehälter getrennt wird, wird ein filterhilfsmittelfreier Austrag des sedimentierten Feststoffes erzielt und die Restfluidmenge, welche zusammen mit dem sedimentierten Feststoff ausgetragen wird, verringert.

Besondere Ausgestaltungen des erfindungsgemäßen Verfahrens sind Gegenstand der abhängigen Ansprüche 8 bis 11, deren Vorteile bereits vorstehend im Zusammenhang mit den bevorzugten Ausgestaltungen der erfindungsgemäßen Vorrichtung erläutert worden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Darstellung einer Filtervorrichtung zur Filtrierung eines Feststoffe enthaltenden fluiden Mediums;
- Fig. 2: eine teilweise geschnittene Seitenansicht eines Rückspülfilters mit Grobschmutzauslass und einer Spülleitung der Filtervorrichtung aus Fig. 1, während einer Filtrierphase des Rückspülfilters;
- Fig. 3: eine der Fig. 2 entsprechende Darstellung des Rückspülfilters mit Grobschmutzauslass und der Spülleitung während einer Rückspülphase des Rückspülfilters;
- Fig. 4: eine schematische, teilweise geschnittene Seitenansicht einer Sedimentationsvorrichtung der Filtervorrichtung aus Fig. 1, in einer Sedimentationsphase der Sedimentationsvorrichtung;
- Fig. 5: eine der Fig. 4 entsprechende Darstellung der Sedimentationsvorrichtung in einer Sediment- und Klarphasenaustragphase der Sedimentationsvorrichtung;
- Fig. 6: eine der Fig. 5 entsprechende Darstellung der Sedimentationsvorrichtung, am Ende der Klarphasenaustragphase der Sedimentationsvorrichtung; und
- Fig. 7: eine der Fig. 6 entsprechende Darstellung der Sedimentationsvorrichtung, in einer Siebspülphase der Sedimentationsvorrichtung.

Gleiche oder funktional äquivalente Elemente sind in allen Figuren mit denselben Bezugszeichen bezeichnet.

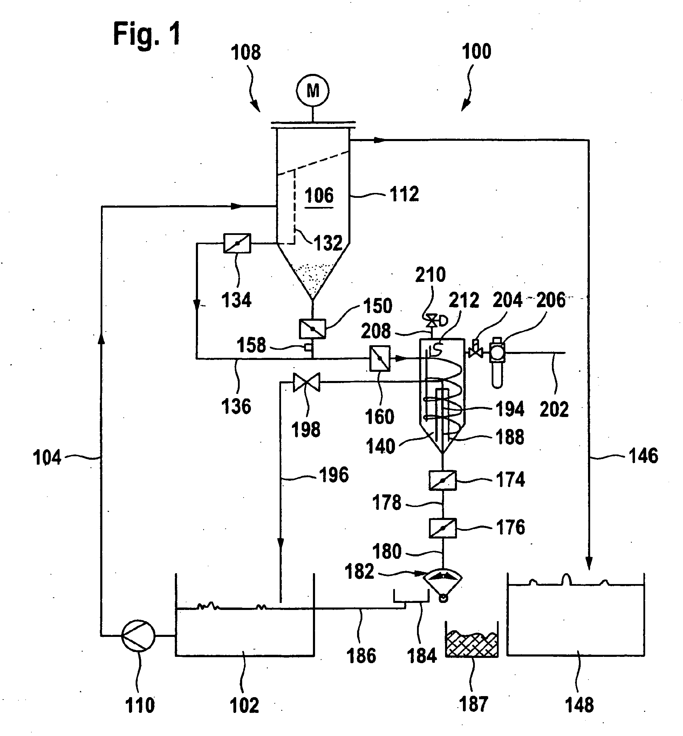

Eine in den Fig. 1 bis 7 dargestellte, als Ganzes mit 100 bezeichnete Filtervorrichtung zur Filtrierung eines Feststoffe enthaltenden fluiden Mediums, beispielsweise eines wässrigen Reinigers, eines Öls oder einer Emulsion, umfasst einen Schmutztank 102 zur Aufnahme des zu filtrierenden Mediums, der über eine Filter-Zuführleitung 104 mit einem schmutzseitigen Raum 106 eines Rückspülfilters 108 verbunden ist.

In der Filter-Zuführleitung 104 ist eine Filterpumpe 110 zum Fördern des zu filtrierenden Mediums aus dem Schmutztank 102 zu dem Rückspülfilter 108 angeordnet.

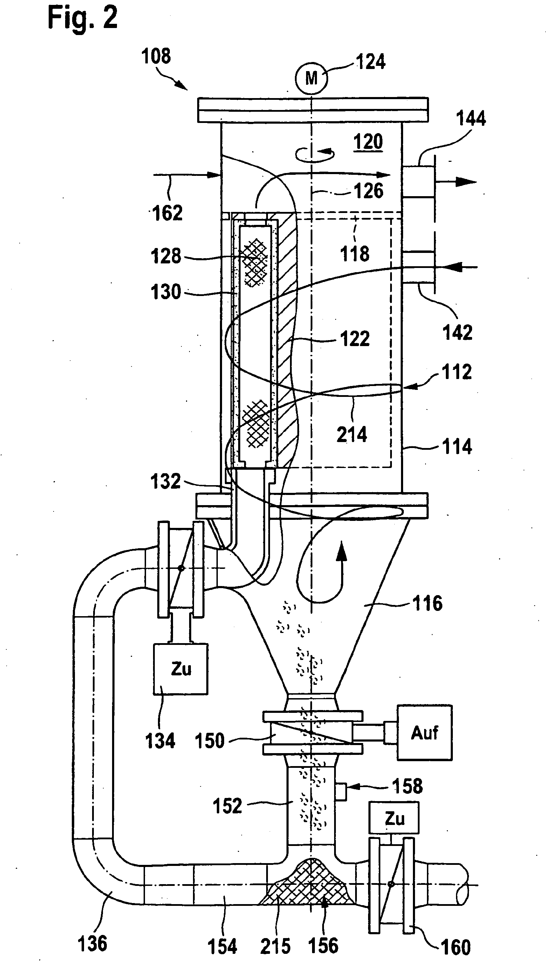

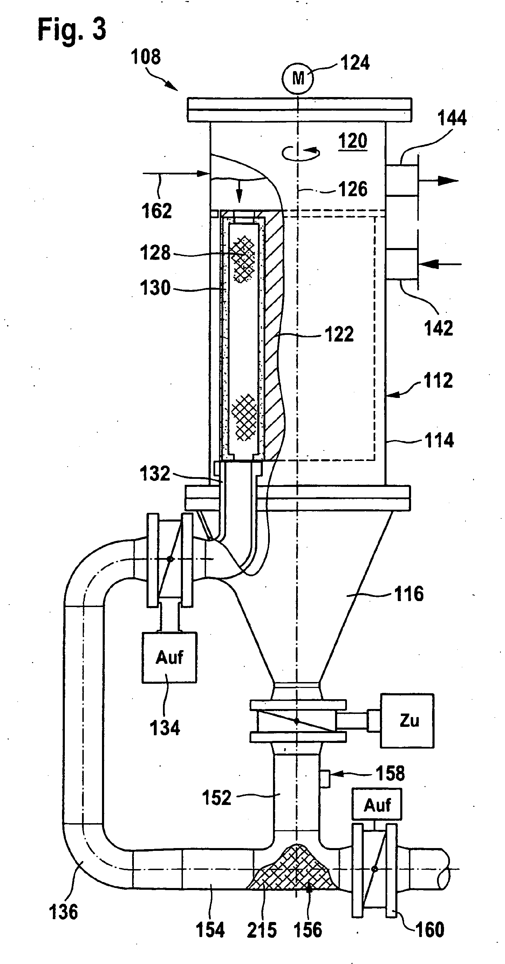

Der Aufbau des Rückspülfilters 108 ist im einzelnen aus den Figuren 2 und 3 zu ersehen.

Das Rückspülfilter 108 umfasst ein Filtergehäuse 112 mit einem im wesentlichen zylindrischen oberen Abschnitt 114 und einem sich nach unten an den oberen Abschnitt 114 anschließenden, sich nach unten konisch verjüngenden unteren Abschnitt 116.

Der obere Abschnitt 114 des Filtergehäuses 112 ist durch eine horizontale Trennwand 118 in einen oberhalb der Trennwand 118 liegenden filtratseitigen Raum 120 und den unterhalb der Trennwand 118 liegenden schmutzseitigen Raum 106 getrennt, wobei zu dem schmutzseitigen Raum 106 des Rückspülfilters 108 auch der Innenraum des unteren Abschnitts 116 des Filtergehäuses 112 zählt.

In dem Filtergehäuse 112 ist ferner ein Filtereinsatz 122 angeordnet, der mittels eines Motors 124 um eine vertikale Drehachse 126 drehbar ist und mehrere Filterelemente 128 enthält, die durch Drehung des Filtereinsatzes 122 um die Drehachse 126 nacheinander in eine Filterkammer 130 des Rückspülfilters 108 bewegbar sind.

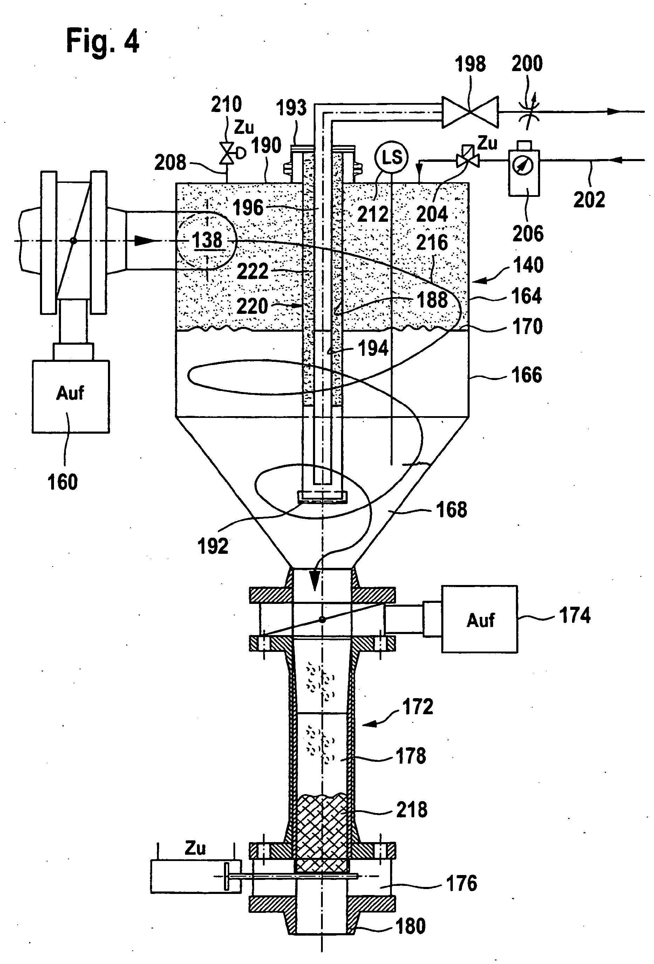

Das jeweils in der Filterkammer 130 befindliche Filterelement 128 ist filtratseitig mit dem filtratseitigen Raum 120 des Filtergehäuses 112 und schmutzseitig mit einer Rückspülleitung 132 verbunden, welche von der Filterkammer 130 zu einem Rückspülventil 134 führt. Das Rückspülventil 134 ist ferner an eine Spülleitung 136 angeschlossen, welche von dem Rückspülfilter 108 zu einem Fluideinlass 138 (siehe Fig. 4) eines Sedimentationsbehälters 140 führt.

Ein in den schmutzseitigen Raum 106 des Filtergehäuses 112 mündender schmutzseitiger Zulauf 142 des Rückspülfilters 108 ist an die Filter-Zuführleitung 104 angeschlossen.

Ein in den filtratseitigen Raum 120 des Filtergehäuses 112 mündender filtratseitiger Rücklauf 144 des Rückspülfilters 108 ist über eine Filter-Rücklaufleitung 146 (siehe Fig. 1) mit einem Saubertank 148 zur Aufnahme des filtrierten Mediums verbunden.

Ferner mündet in den filtratseitigen Raum 120 des Filtergehäuses 112 eine Druckluftzufuhr 162, welche mit einer (nicht dargestellten) Druckluftquelle verbunden ist.

Der konisch zulaufende untere Abschnitt 116 des Filtergehäuses 112 ist an seinem unteren Ende mittels eines Grobschmutzventils 150 verschließbar.

Das Grobschmutzventil 150 ist ferner über eine vertikal verlaufende Grobschmutzleitung 152 mit der Spülleitung 136 verbunden, wobei die als Grobschmutzauslass dienende Grobschmutzleitung 152 an ihrem unteren Ende in einen im wesentlichen horizontal verlaufenden Abschnitt 154 der Spülleitung 136 einmündet, so dass in der Spülleitung 136 im Bereich der Einmündung der Grobschmutzleitung 152 ein Grobschmutzsammelraum 156 gebildet ist.

An der Grobschmutzleitung 152 ist ein Metallsensor 158 zur Detektion des Füllstandes des Grobschmutzes in der Grobschmutzleitung 152 angeordnet.

Stromabwärts von dem Grobschmutzsammelraum 156 ist in der Spülleitung 136 ein Rückspülungs-Austragventil 160 angeordnet, mittels welchem der Zugang zu dem in den Fig. 4 bis 7 im einzelnen dargestellten Sedimentationsbehälter 140 sperrbar ist.

Der Sedimentationsbehälter 140 umfasst ein Behältergehäuse 164 mit einem im wesentlichen zylindrischen oberen Abschnitt 166 und einem sich an den oberen Abschnitt 166 nach unten anschließenden, sich konisch nach unten verjüngenden unteren Abschnitt 168.

In den oberen Abschnitt 166 des Behältergehäuses 164 mündet die Spülleitung 136 über den Fluideinlass 138, und zwar oberhalb eines Fluidspiegels 170 in dem Sedimentationsbehälter 140.

Das untere Ende des konisch zulaufenden Abschnitts 168 des Sedimentationsbehälters 140 mündet in eine als Ganzes mit 172 bezeichnete Schleuseneinrichtung, welche ein an den Sedimentationsbehälter 140 angrenzendes oberes Schleusenventil 174, ein einen unteren Abschluss der Schleuseneinrichtung 172 bildendes unteres Schleusenventil 176 und eine zwischen dem oberen Schleusenventil 174 und dem unteren Schleusenventil 176 angeordnete Schleusenkammer 178 umfasst, deren Innenraum einen Sedimentsammelbereich bildet.

Das untere Schleusenventil 176 kann insbesondere als ein Schieberventil ausgebildet sein.

Das untere Schleusenventil 176 ist ferner über eine Sediment-Abführleitung 180 mit einem Einlass eines Feststoffseparators 182 (siehe Fig. 1) verbunden.

Der Feststoffseparator 182 dient dazu, das in dem aus der Schleusenkammer 178 stammenden Sediment enthaltene restliche fluide Medium von dem Feststoffanteil des Sediments zu trennen.

Der Feststoffseparator 182 kann insbesondere so aufgebaut sein und funktionieren wie der in der WO 2004/041438 A1 beschriebene magnetische Feststoffseparator. Auf die WO 2004/041438 A1 wird hiermit in Bezug auf den Aufbau und die Funktionsweise eines solchen Feststoffseparators ausdrücklich Bezug genommen.

Von einem Fluidauslass 184 des Feststoffseparators 182 führt eine Restflüssigkeits-Rücklaufleitung 186 zu dem Schmutztank 102.

Der in dem Feststoffseparator 182 von der Restflüssigkeit abgetrennte Feststoffanteil des Sediments aus der Schleusenkammer 178 gelangt in einen Feststoffsammeltiehälter 187.

In dem Sedimentationsbehälter 140 ist ferner im wesentlichen mittig ein Spülrohr 188 angeordnet, welches sich längs einer im wesentlichen vertikalen Rohrachse durch einen Deckel 190 des Sedimentationsbehälters 140 hindurch in dessen Innenraum bis in den unteren Abschnitt 168 des Behältergehäuses 164 hinein erstreckt und dort an einer unterhalb des Fluidspiegels 170 gelegenen Stelle in den Innenraum des Sedimentationsbehälters 140 mündet:

Die Mündung des Spülrohrs 188 ist an dessen unterem Ende durch ein Sieb 192 verschlossen.

Das obere Ende des Spülrohrs 188 ist durch eine Abdichtplatte 193 verschlossen.

Innerhalb des Spülrohrs 188 verläuft ein koaxial zu dem Spülrohr 188 angeordneter Anfangsabschnitt 194 einer Klarphasen-Rückführleitung 196, welche die Abdichtplatte 193 durchsetzt und von dem Sedimentationsbehälter 140 zu dem Schmutztank 102 führt (siehe Fig. 1).

In der Klarphasen-Rückführleitung 196 sind ein Sperrventil 198 und ein Durchflussregler 200 angeordnet.

In den oberhalb des Fluidspiegels 170 gelegenen Teil des Innenraums des Sedimentationsbehälters 140 mündet ferner eine Druckluft-Zuführleitung 202, in welcher ein Druckluftventil 204 und ein Druckregler 206 angeordnet sind.

Die Druckluft-Zuführleitung 202 ist mit einer (nicht dargestellten) Druckluftquelle verbunden.

Ferner mündet in den oberhalb des Fluidspiegels 170 gelegenen Teil des Innenraums des Sedimentationsbehälters 140 eine Belüftungsleitung 208, in welcher ein Belüftungsventil 210 angeordnet ist, so dass der Innenraum des Sedimentationsbehälters 140 bei geöffnetem Belüftungsventil 210 mit Umgebungsluft belüftbar ist.

Ferner ist der Sedimentationsbehälter 140 mit einer Niveausonde 212 zur Detektion eines Niveaus des Fluidspiegels 170 innerhalb des Sedimentationsbehälters 140 versehen.

Die vorstehend beschriebene Filtervorrichtung 100 funktioniert wie folgt:
In dem Schmutztank 102 wird das mit abzufiltrierenden Feststoffen vermengte fluide Medium, beispielsweise eine wässerige Reinigungsflüssigkeit, ein Öl oder eine Emulsion, gesammelt.

Aus dem Schmutztank 102 wird das zu filtrierende Medium über die Filterpumpe 110 dem schmutzseitigen Raum 106 des Rückspülfilters 108 zugeführt.

Wie aus Fig. 2 zu ersehen ist, verläuft der Zulauf 142 des Rückspülfilters 108 im wesentlichen tangential zu der inneren Begrenzungswand des Filtergehäuses 112, so dass das zu filtrierende Medium sich in einer wendelförmigen Bahn 214 durch den Innenraum des Filtergehäuses 112 bewegt.

Beim Eintritt des zu filtrierenden Mediums in das Rückspülfilter 108 sinken schwere Schmutzpartikel nach unten durch das geöffnete Grobschmutzventil 150 und die Grobschmutzleitung 152 in den Grobschmutzsammelraum 156 in der Spülleitung 136, wo sich infolgedessen während der Filtrierphase des Rückspülfilters 108 eine Grobschmutzansammlung 215 bildet (siehe Fig. 2).

Während dieser in Fig. 2 dargestellten Filtrierphase des Rückspülfilters 108 sind das Rückspülventil 134 und das Rückspülungs-Austragventil 160 geschlossen.

Das zu filtrierende Medium wird aus dem schmutzseitigen Raum 106 des Rückspülfilters 108 durch das in der Filterkammer 130 befindliche Filterelement 128 dem filtratseitigen Raum 120 des Rückspülfilters 108 zugeführt.

Aus dem filtratseitigen Raum 120 des Rückspülfilters 108 gelangt das Filtrat über die Filter-Rücklaufleitung 146 in den Saubertank 148.

Beim Passieren des Filterelements 128 werden die feineren Feststoffpartikel entsprechend der Filterfeinheit des Filterelements 128 zwischen der Schmutzseite und der Sauberseite des Filterelements 128 zurückgehalten.

Wenn die maximale Schrnutzaufnahmekapazität des Filterelements 128 erreicht ist, wird eine in Fig. 3 dargestellte Rückspülphase des Rückspülfilters 108 zur Regeneration des Filterelements 128, d.h. eine druckluftunterstützte Rückspülung des Filtermediums von der Sauberseite zur Schmutzseite hin, eingeleitet.

Für diesen Rückspülvorgang wird das Grobschmutzventil 150 geschlossen, und das Rückspülungs-Austragventil 160 in der Spülleitung 136 wird geöffnet.

Anschließend wird das Rückspülventil 134 kurzzeitig geöffnet, und der filtratseitige Raum 120 des Rückspülfilters 108 wird mittels der Druckluftzufuhr 162 mit Druckluft beaufschlagt, so dass Filtrat aus dem filtratseitigen Raum 120 des Rückspülfilters 108 druckluftunterstützt durch das Filtermedium des Filterelements 128 zurück in den schmutzseitigen Raum 106 des Rückspülfilters 108, von dort in die Rückspülleitung 132 und von dort durch das geöffnete Rückspülventil 134 in die Spülleitung 136 gespült wird.

Zusammen mit dem als Spülmedium verwendeten Filtrat gelangen auch die bei der Rückspülung von dem Filterelement 128 abgelösten Verunreinigungen in die Spülleitung 136.

Das rückgespülte Fluid gelangt auch durch den Grobschmutzsammelraum 156 und spült den dort angesammelten Grobschmutz durch das geöffnete Rückspülungs-Austragventil 160 in den Sedimentationsbehälter 140.

Das Rückspülungs-Austragventil 160 ist während jeder Rückspülphase während eines Zeitraums von beispielsweise ungefähr 1 s bis 3 s geöffnet.

Die Rückspülphase des Rückspülfilters 108 durch Schließen des Rückspülventils 134 und des Rückspülungs-Austragventils 160 sowie durch erneutes Öffnen des Grobschmutzventils 150 beendet, worauf eine neue Filtrierphase des Rückspülfilters 108 beginnt.

Die Rückspülphase des Rückspülfilters 108 kann eingeleitet werden, wenn mittels des Metallsensors 158 an der Grobschmutzleitung 152 ein vorgegebener maximaler Füllstand des Grobschmutzes in der Grobschmutzleitung 152 detektiert wird.

Alternativ oder ergänzend hierzu kann eine Rückspülphase des Rückspülfilters 108 eingeleitet werden, wenn der Differenzdruck zwischen der Schmutzseite und der Sauberseite des Filterelements 128 einen vorgegebenen Maximalwert überschreitet.

Die Aufbereitung des in der Rückspülphase rückgespülten Fluids erfolgt in dem in den Fig. 4 bis 7 dargestellten Sedimentationsbehälter 140.

Wie aus Fig. 4 zu ersehen ist, ist der Fluideinlass 138 im wesentlichen tangential zu der Innenwand des Behältergehäuses 164 ausgerichtet, so dass das rückgespülte Fluid in einer wendelförmigen Bahn 216 in den Innenraum des Sedimentationsbehälters 140 eintritt.

In dem Sedimentationsbehälter 140 sedimentieren die in dem rückgespülten Fluid enthaltenen Feststoffe (Grobschmutz und aus dem Filterelement 128 rückgespülte Verunreinigungen) und gelangen durch das geöffnete obere Schleusenventil 174 in die Schleusenkammer 178, die nach unten durch das geschlossene untere Schleusenventil 176 verschlossen ist.

In der Schleusenkammer 178 bildet sich eine Sedimentansammlung 218.

Somit bilden der Sedimentationsbehälter 140 und die Schleuseneinrichtung 172 zusammen eine Sedimentationsvorrichtung der Filtervorrichtung 100.

Während dieser in Fig. 4 dargestellten Sedimentierphase sind das Sperrventil 198 in der Klarphasen-Rückführleitung 196, das Druckluftventil 204 in der Druckluft-Zuführleitung 202 und das Belüftungsventil 210 in der Belüftungsleitung 208 geschlossen.

Durch die Zufuhr von rückgespültem Fluid aus der Spülleitung 136 steigt der Fluidspiegel 170 in dem Sedimentationsbehälter 140 während dieser Sedimentierphase an.

Nach Ablauf einer vorgegebenen Sedimentationszeit wird das obere Schleusenventil 174 geschlossen.

Anschließend wird der Innenraum des Sedimentationsbehälters 140 durch Öffnen des Druckluftventils 204 kontrolliert mit Druckluft bei einem Überdruck von beispielsweise ungefähr 0,3 bar beaufschlagt.

Ferner wird das Sperrventil 198 in der Klarphasen-Rückführleitung 196 geöffnet, so dass die im Innenraum des Sedimentationsbehälters 140 enthaltene feststofffrei Flüssigkeit (Klarphase) durch das Sieb 192 am unteren Ende des Spülrohrs 188 in die Klarphasen-Rückführleitung 196 gedrückt und über die Klarphasen-Rückführleitung 196 in den Schmutztank 102 zurückgeführt wird. Dabei steigt auch der Klarphasen-Pegel in der nach außen durch das Spülrohr 188 und nach innen durch den Anfangsabschnitt 194 der Klarphasen-Rückführleitung 196 begrenzten Luftkissenkammer 220 an, so dass das den oberen Bereich der Luftkissenkammer 220 ausfüllende Luftkissen 222 komprimiert wird, bis darin der Überdruck von beispielsweise ungefähr 0,3 bar erreicht ist, mit welchem die Druckluft dem Innenraum des Sedimentationsbehälters 140 zugeführt wird.

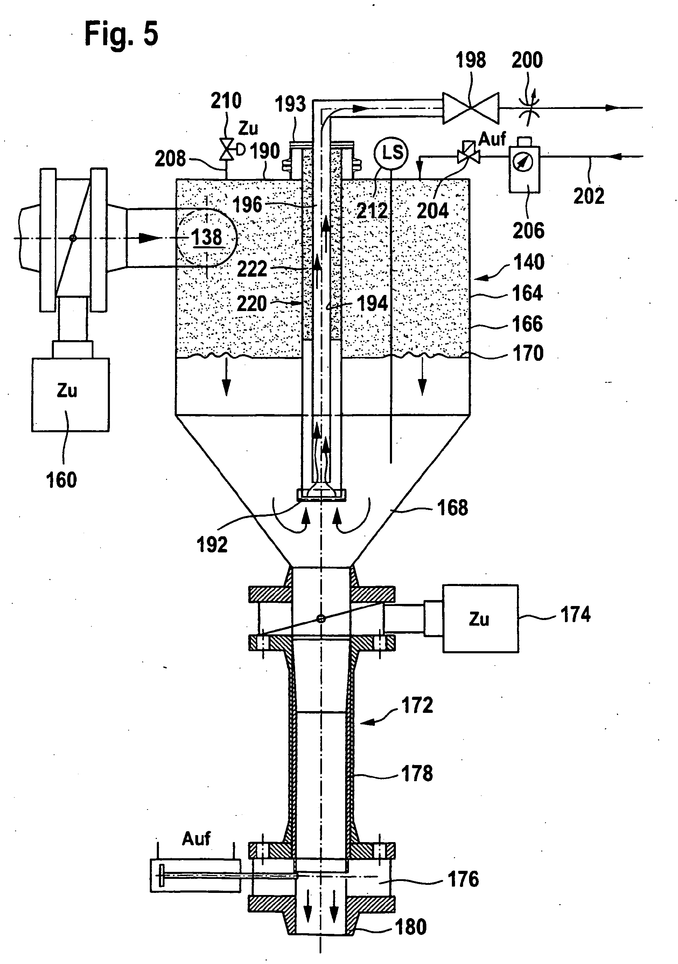

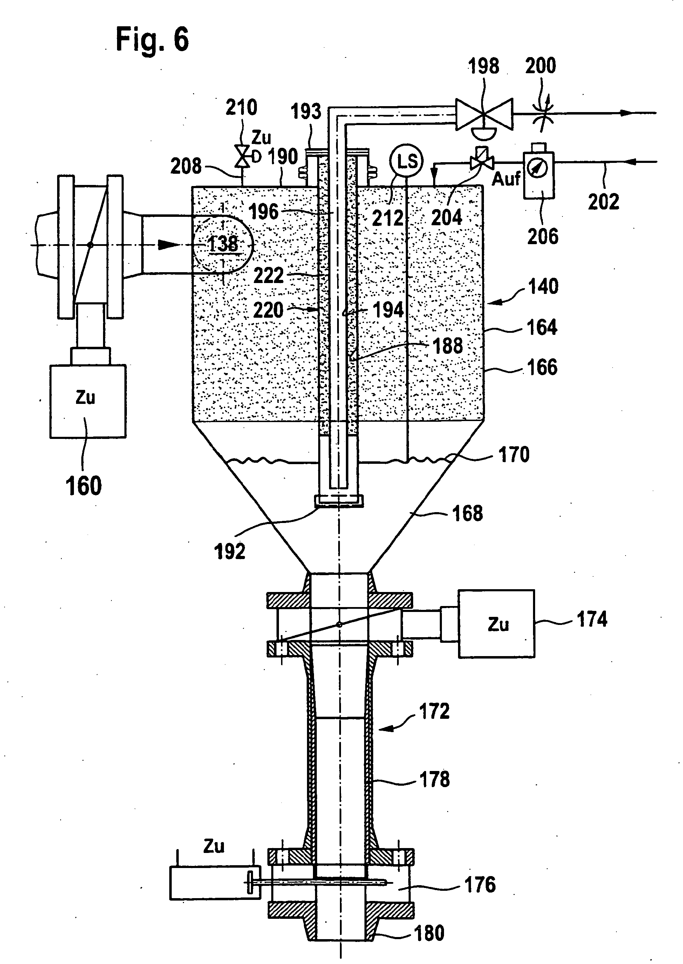

Während dieser Klarphasen-Austragphase, deren Beginn in Fig. 5 und deren Ende in Fig. 6 dargestellt ist, sinkt der Fluidspiegel 170 im Sedimentationsbehälter 140 ab, bis das in Fig. 6 dargestellte vorgegebene Minimalniveau erreicht ist, was mittels der Niveausonde 212 detektiert wird.

Während dieser Klarphasen-Austragphase wird die Schleusenkammer 178 durch Öffnen des unteren Schleusenventils 176 entleert, so dass das in der Schleusenkammer 178 angesammelte Sediment, welches einen Feststoffanteil und Restflüssigkeit enthält, durch die Sedimentabführleitung 180 in den Feststoffseparator 182 gelangt.

Nach Entleerung der Schleusenkammer 178 wird das untere Schleusenventil 176 wieder geschlossen (siehe Fig. 6).

In dem Feststoffseparator 182 wird der Feststoffanteil des Sediments von der Restflüssigkeit getrennt. Die Restflüssigkeit wird über die Restflüssigkeits-Rücklaufleitung 186 dem Schmutztank 102 zugeführt. Der Feststoffanteil wird dem Feststoffsammelbehälter 187 und von dort einer Weiterbearbeitung oder Entsorgung zugeführt.

Nach Erreichen des Minimalniveaus des Fluidspiegels 170 in dem Sedimentationsbehälter 140 werden das Druckluftventil 204 in der Druckluft-Zuführleitung 202 und das Sperrventil 198 in der Klarphasen-Rückführleitung 196 geschlossen.

Anschließend werden das Belüftungsventil 210 und das obere Schleusenventil 174 gleichzeitig geöffnet, so dass die im unteren Bereich der Luftkissenkammer 220 stehende Flüssigkeitssäule schlagartig entlastet wird.

Das im oberen Bereich der Luftkissenkammer 220 vorhandene komprimierte Luftkissen 222 expandiert daher schlagartig nach unten, wodurch die im unteren Bereich des Spülrohrs 188 befindliche Flüssigkeit durch das Sieb 192 in den unteren Abschnitt 168 des Behältergehäuses 164 gedrückt wird und dabei an dem Sieb 192 angesammelte Verunreinigungen von dem Sieb 192 löst und mit sich führt.

Die auf diese Weise vom Sieb 192 abgelösten Verunreinigungen sinken nach unten durch das geöffnete obere Schleusenventil 174 in die Schleusenkammer 178.

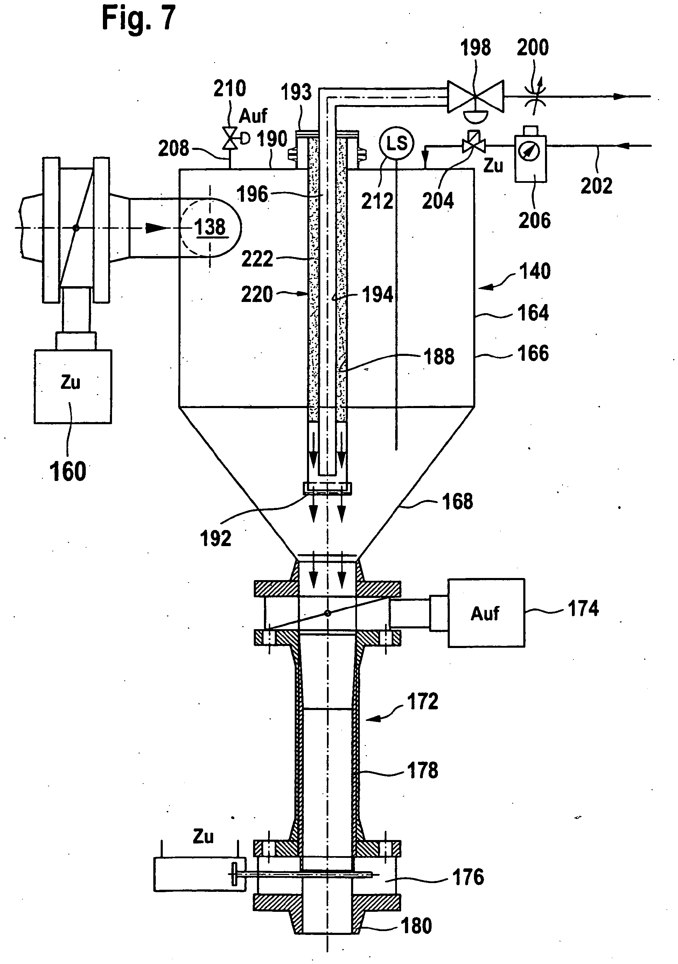

Damit ist die in Fig. 7 dargestellte Siebreinigungsphase abgeschlossen.

Eine erneute Sedimentierphase des Sedimentationsbehälters 140 beginnt mit dem nächsten Öffnen des Rückspülungs-Austragventils 160 (siehe Fig. 4), d.h. mit der nächsten Rückspülphase des Rückspülfilters 108.

Bei einer alternativen Ausgestaltung der vorstehend beschriebenen Filtervorrichtung 100 ist der obere Bereich des Spülrohrs 188 mit einer Druckluftzufuhr verbunden, so dass die Expansion des Luftkissens 222 in der Siebreinigungsphase mittels extern zugeführter Druckluft unterstützt wird.

Bei einer weiteren alternativen Ausgestaltung der vorstehend beschriebenen Filtervorrichtung 100 führt die Klarphasen-Rückführleitung 196 von dem Sedimentationsbehälter 140 aus nicht zu dem Schmutztank 102, sondern zu dem Saubertank 148.

Im übrigen stimmen diese alternativen Ausführungsformen der Filtervorrichtung 100 hinsichtlich Aufbau und Funktion mit der vorstehend beschriebenen Filtervorrichtung 100 überein.

## Patentansprüche

1. Filtervorrichtung zur Filtrierung eines Feststoffe enthaltenden fluiden Mediums, umfassend ein Rückspülfilter (108) und eine Vorrichtung zum Aufbereiten von rückgespültem Fluid aus dem Rückspülfilter (108), welches Feststoffe enthält, wobei die Vorrichtung zum Aufbereiten von rückgespültem Fluid eine Sedimentationsvorrichtung zum Abtrennen von Feststoffen aus dem rückgespülten Fluid durch Sedimentation in einem Sedimentsammelbereich (178) umfasst und
wobei die Sedimentationsvorrichtung einen Sedimentationsbehälter (140), der mit dem Rückspülfilter (108) mittels einer Spülleitung (136) verbunden ist, und eine Schleuseneinrichtung (172) umfasst, mittels welcher der Sedimentsammelbereich (178) während einer Sedimentationsphase mit dem Sedimentationsbehälter (140) verbindbar und während einer Austragphase von dem Sedimentationsbehälter (140) abtrennbar und entleerbar ist,
**dadurch gekennzeichnet,**
**dass** die Sedimentationsvorrichtung eine Druckluftzufuhr umfasst, mittels welcher der Innenraum des Sedimentationsbehälters (140) mit unter einem erhöhten Druck stehender Luft beaufschlagbar ist,
wobei Klarphase durch den erhöhten Druck aus dem Innenraum des Sedimentationsbehälters (140) verdrängbar ist,
**dass** der Sedimentationsbehälter (140) mit einer Luftkissenkammer (220) versehen ist, welche ein durch Zufuhr der Druckluft zu dem Sedimentationsbehälter (140) komprimierbares Luftkissen (222) enthält, und dass die Sedimentationsvorrichtung ein Sieb (192) umfasst, durch welches Klarphase aus dem Sedimentationsbehälter (140) abführbar ist, wobei beim Abführen der Klarphase an dem Sieb (192) angesammelte Verunreinigungen mittels einer durch Druckreduzierung im Sedimentationsbehälter (140) verursachten Expansion des Luftkissens (222) von dem Sieb (192) lösbar sind.

2. Filtervorrichtung nach Anspruch 1, **dadurch gekennzeichnet, dass** die Vorrichtung einen Feststoffseparator (182) umfasst, welchem das aus dem Sedimentsammelbereich (178) ausgetragene Sediment zuführbar ist.

3. Filtervorrichtung nach Anspruch 2, **dadurch gekennzeichnet, dass** die Vorrichtung eine Rücklaufleitung (186) umfasst, durch welche mittels des Feststoffseparators (182) abgetrenntes Restfluid einem Behälter (102) für dem Rückspülfilter (108) zuzuführendes fluides Medium zuführbar ist.

4. Filtervorrichtung nach einem der Ansprüche 1 bis 3, **dadurch gekennzeichnet, dass** die Vorrichtung eine Klarphasenleitung (196) umfasst, durch welche Klarphase aus dem Sedimentationsbehälter (140) einem Behälter (102) für dem Rückspülfilter (108) zuzuführendes fluides Medium zuführbar ist.

5. Filtervorrichtung nach einem der Ansprüche 1 bis 4, **dadurch gekennzeichnet, dass** die Vorrichtung eine Klarphasenleitung (196) umfasst, durch welche Klarphase aus dem Sedimentationsbehälter (140) einem Behälter (148) für Filtrat aus dem Rückspülfilter (108) zuführbar ist.

6. Filtervorrichtung nach einem der Ansprüche 1 bis 5, **dadurch gekennzeichnet, dass** die Luftkissenkammer (220) durch ein oder mehrere Rohre (188, 194) begrenzt ist.

7. Verfahren zum Aufbereiten von rückgespültem Fluid aus einem Rückspülfilter (108), welches Feststoffe enthält, umfassend die folgenden Verfahrensschritte:
- Verbinden des Rückspülfilters (108) mit einem Sedimentationsbehälter (140) mittels einer Spülleitung (136);
- Verbinden eines Sedimentsammelbereichs (178) mit dem Sedimentationsbehälter (140) mittels einer Schleuseneinrichtung (172);
- Sedimentieren von Feststoffen aus dem rückgespülten Fluid in dem Sedimentsammelbereich (178); und
- Trennen des Sedimentsammelbereichs (178) von dem Sedimentationsbehälter (140) und Entleeren des Sedimentsammelbereichs (178) mittels der Schleuseneinrichtung (172);
wobei der Innenraum des Sedimentationsbehälters (140) mit unter einem erhöhten Druck stehender Luft beaufschlagt wird,
wobei Klarphase mittels der unter einem erhöhten Druck stehenden Luft aus dem Innenraum des Sedimentationsbehälters (140) verdrängt wird, wobei durch Zufuhr der Druckluft zu dem Sedimentationsbehälter (140) ein in einer Luftkissenkammer (220) angeordnetes Luftkissen (222) komprimiert wird,
wobei Klarphase aus dem Sedimentationsbehälter (140) durch ein Sieb (192) abgeführt wird und
wobei beim Abführen der Klarphase an dem Sieb (192) angesammelte Verunreinigungen mittels einer durch Druckreduzierung im Sedimentationsbehälter (140) verursachten Expansion des Luftkissens (222) von dem Sieb (192) gelöst werden.

8. Verfahren nach Anspruch 7, **dadurch gekennzeichnet, dass** das aus dem Sedimentsammelbereich (178) ausgetragene Sediment einem Feststoffseparator (182) zugeführt wird.

9. Verfahren nach Anspruch 8, **dadurch gekennzeichnet, dass** mittels des Feststoffseparators (182) aus dem Sediment abgetrenntes Restfluid einem Behälter (102) für dem Rückspülfilter (108) zuzuführendes fluides Medium zugeführt wird.

10. Verfahren nach einem der Ansprüche 7 bis 9, **dadurch gekennzeichnet, dass** Klarphase aus dem Sedimentationsbehälter (140) einem Behälter (102) für dem Rückspülfilter (108) zuzuführendes fluides Medium zugeführt wird.

11. Verfahren nach einem der Ansprüche 7 bis 10, **dadurch gekennzeichnet, dass** Klarphase aus dem Sedimentationsbehälter (140) einem Behälter (148) für Filtrat aus dem Rückspülfilter (108) zugeführt wird.

## Claims

1. Filter device for filtering a fluid medium which contains solids, comprising a backflushing filter (108) and a device for processing backflushed fluid from the backflushing filter (108), which contains solids, wherein the device for processing backflushed fluid comprises a sedimentation device for separating solids from the backflushed fluid by sedimentation in a sediment collecting region (178), and
wherein the sedimentation device comprises a sedimentation container (140), which is connected to the backflushing filter (108) via a flushing line (136), and a sluice mechanism (172), by means of which the sediment collecting region (178) is connectable to the sedimentation container (140) during a sedimentation phase and during a discharge phase is separable from the sedimentation container (140) and is emptyable,
**characterised in that**
the sedimentation device comprises a compressed air supply, by means of which the interior of the sedimentation container (140) is actable upon by air at raised pressure,
wherein clear phase is displaceable from the interior of the sedimentation container (140) by the raised pressure,
**in that** the sedimentation container (140) is provided with an air cushion chamber (220), which contains an air cushion (222) which is compressible by supply of the compressed air to the sedimentation container (140), and
**in that** the sedimentation device comprises a screen (192), through which clear phase is removable from the sedimentation container (140),
wherein contaminants collected on the screen (192) during removal of the clear phase are releasable from the screen by means of expansion of the air cushion (222) caused by pressure reduction in the sedimentation container (140).

2. Filter device according to claim 1, **characterised in that** the device comprises a solids separator (182), to which the sediment discharged from the sediment collecting region (178) is suppliable.

3. Filter device according to claim 2, **characterised in that** the device comprises a return line (186), by means of which residual fluid separated by means of the solids separator (182) is suppliable to a container (102) for fluid medium to be supplied to the backflushing filter (108).

4. Filter device according to any one of claims 1 to 3, **characterised in that** the device comprises a clear phase line (196), by means of which clear phase from the sedimentation container (140) is suppliable to a container (102) for fluid medium to be supplied to the backflushing filter (108).

5. Filter device according to any one of claims 1 to 4, **characterised in that** the device comprises a clear phase line (196), by means of which clear phase is suppliable from the sedimentation container (140) to a container (148) for filtrate from the backflushing filter (108).

6. Filter device according to any one of claims 1 to 5, **characterised in that** the air cushion chamber (220) is bounded by one or more tubes (188, 194).

7. Method for processing backflushed fluid from a backflushing filter (108), which contains solids, comprising the following method steps:
- connecting the backflushing filter (108) to a sedimentation container (140) by means of a flushing line (136);
- connecting a sediment collecting region (178) to the sedimentation container (140) by means of a sluice mechanism (172);
- sedimenting solids from the backflushed fluid in the sediment collecting region (178); and
- separating the sediment collecting region (178) from the sedimentation container (140) and emptying the sediment collecting region (178) by means of the sluice mechanism (172);
wherein the interior of the sedimentation container (140) is acted upon by air at raised pressure,
wherein clear phase is displaced from the interior of the sedimentation container (140) by means of the air at raised pressure,
wherein an air cushion (222) arranged in an air cushion chamber (220) is compressed by supply of the compressed air to the sedimentation container (140),
wherein clear phase is removed from the sedimentation container (140) through a screen (192), and
wherein contaminants collected on the screen (192) during removal of the clear phase are released from the screen by means of expansion of the air cushion (222) caused by pressure reduction in the sedimentation container (140).

8. Method according to claim 7, **characterised in that** the sediment discharged from the sediment collecting region (178) is supplied to a solids separator (182).

9. Method according to claim 8, **characterised in that** residual fluid separated from the sediment by means of the solids separator (182) is supplied to a container (102) for fluid medium to be supplied to the backflushing filter (108).

10. Method according to any one of claims 7 to 9, **characterised in that** clear phase from the sedimentation container (140) is supplied to a container (102) for fluid medium to be supplied to the backflushing filter (108).

11. Method according to any one of claims 7 to 10, **characterised in that** clear phase from the sedimentation container (140) is supplied to a container (148) for filtrate from the backflushing filter (108).

## Revendications

1. Système de filtration, destiné à filtrer un milieu fluide contenant des matières solides, comprenant un filtre à lavage à contre-courant (108) et un dispositif de traitement du fluide provenant du filtre à lavage à contre-courant (108) et contenant des matières solides, ledit dispositif de traitement du fluide lavé à contre-courant comprenant un dispositif de sédimentation destiné à séparer des matières solides du fluide lavé à contre-courant par sédimentation dans une zone de collecte de sédiments (178), et
le dispositif de sédimentation comprenant un réservoir de sédimentation (140) relié par une conduite de lavage (136) au filtre à lavage à contre-courant (108), et un dispositif à sas (172) au moyen duquel la zone de collecte de sédiments (178) peut être reliée au réservoir de sédimentation (140) pendant une phase de sédimentation, et peut être séparée du réservoir de sédimentation (140) et être vidangée pendant une phase d'évacuation,
**caractérisé**
**en ce que** le dispositif de sédimentation comprend une amenée d'air comprimé au moyen de laquelle l'intérieur du réservoir de sédimentation (140) peut recevoir de l'air soumis à une pression élevée,
de la phase clarifiée étant refoulable hors de l'intérieur du réservoir de sédimentation (140) du fait de la pression élevée,
**en ce que** le réservoir de sédimentation (140) est pourvu d'un compartiment à coussin d'air (220), lequel contient un coussin d'air (222) comprimable par amenée de l'air r comprimé vers le réservoir de sédimentation (140), et
**en ce que** le dispositif de sédimentation comprend un tamis (192) par lequel de la phase clarifiée est évacuable hors du réservoir de sédimentation (140),
des impuretés accumulées sur le tamis (192) lors de l'évacuation de la phase clarifiée étant détachables dudit tamis (192) par expansion du coussin d'air (222) due à une réduction de pression dans le réservoir de sédimentation (140).

2. Système de filtration selon la revendication 1, **caractérisé en ce que** ledit système de filtration comprend un séparateur de matières solides (182) auquel peuvent être amenés les sédiments évacués de la zone de collecte de sédiments (178).

3. Système de filtration selon la revendication 2, **caractérisé en ce que** ledit système de filtration comprend une conduite de retour (186) par laquelle le fluide résiduel séparé au moyen du séparateur de matières solides (182) peut être amené à un réservoir (102) pour le milieu fluide à conduire vers le filtre à lavage à contre-courant (108).

4. Système de filtration selon l'une des revendications 1 à 3, **caractérisé en ce que** ledit système de filtration comprend une conduite de phase clarifiée (196) par laquelle la phase clarifiée peut être amenée à partir du réservoir de sédimentation (140) à un réservoir (102) pour le milieu fluide à conduire vers le filtre à lavage à contre-courant (108).

5. Système de filtration selon l'une des revendications 1 à 4, **caractérisé en ce que** ledit système de filtration comprend une conduite de phase clarifiée (196), par laquelle la phase clarifiée peut être amenée à partir du réservoir de sédimentation (140) à un réservoir (148) pour le filtrat du filtre à lavage à contre-courant (108).

6. Système de filtration selon l'une des revendications 1 à 5, **caractérisé en ce que** le compartiment à coussin d'air (220) est limité par un ou plusieurs tuyaux (188, 194).

7. Procédé de traitement de fluide provenant d'un filtre à lavage à contre-courant (108) et contenant des matières solides, comprenant les étapes suivantes :
- raccordement du filtre à lavage à contre-courant (108) à un réservoir de sédimentation (140) par une conduite de lavage (136) ;
- raccordement d'une zone de collecte de sédiments (178) au réservoir de sédimentation (140) par un dispositif à sas (172) ;
- sédimentation de matières solides du fluide lavé à contre-courant dans la zone de collecte de sédiments (178) ; et
- séparation de la zone de collecte de sédiments (178) du réservoir de sédimentation (140) et vidange de la zone de collecte de sédiments (178) par le dispositif à sas (172) ;
l'intérieur du réservoir de sédimentation (140) recevant de l'air soumis à une pression élevée,
de la phase clarifiée étant refoulée de l'intérieur du réservoir de sédimentation (140) du fait de l'air sous pression élevée,
un coussin d'air (222) disposé dans un compartiment à coussin d'air (220) étant comprimé par amenée de l'air comprimé dans le réservoir de sédimentation (140),
de la phase clarifiée étant évacuée du réservoir de sédimentation (140) par un tamis (192), et
des impuretés accumulées sur le tamis (192) lors de l'évacuation de la phase clarifiée étant détachées dudit tamis (192) par expansion du coussin d'air (222) due à une réduction de pression dans le réservoir de sédimentation (140).

8. Procédé selon la revendication 7, **caractérisé en ce que** les sédiments évacués de la zone de collecte de sédiments (178) sont amenés à un séparateur de matières solides (182).

9. Procédé selon la revendication 8, **caractérisé en ce que** le fluide résiduel séparé des sédiments au moyen du séparateur de matières solides (182) est amené à un réservoir (102) pour le milieu fluide à conduire vers le filtre à lavage à contre-courant (108).

10. Procédé selon l'une des revendications 7 à 9, **caractérisé en ce que** la phase clarifiée est amenée à partir du réservoir de sédimentation (140) à un réservoir (102) pour le milieu fluide à conduire vers le filtre à lavage à contre-courant (108).

11. Procédé selon l'une des revendications 7 à 10, **caractérisé en ce que** la phase clarifiée est amenée à partir du réservoir de sédimentation (140) à un réservoir (148) pour le filtrat du filtre à lavage à contre-courant (108).
